# EUROPEAN PATENT SPECIFICATION

(11) **EP 0 877 525 B1**
(45) Date of publication and mention of the grant of the patent: **16.07.2003**
(21) Application number: 98303644.3
(22) Date of filing: 08.05.1998
(51) Int. Cl.: H04N 1/60

(54) **Method and apparatus for producing colour conversion table**
Verfahren und Vorrichtung zum Produzieren einer Farbumwandlungstabelle
Procédé et appareil pour produire une table de conversion de couleurs

(30) Priority: 08.05.1997 JP 11770997; 06.05.1998 JP 12360998
(43) Date of publication of application: 11.11.1998
(73) Proprietor: Seiko Instruments Information Devices Inc., Chiba-shi, Chiba (JP)
(72) Inventor: Suzuki, Masahiro, c/o Seiko Instr. Inf. Dev. Inc., Chiba-shi, Chiba (JP)
(74) Representative: Sturt, Clifford Mark

(56) References cited:
- EP-A- 0 096 090
- EP-A- 0 604 755
- EP-A- 0 681 396
- EP-A- 0 758 181
- WO-A-93/20648
- DE-A- 4 335 143
- JOHJI TAJIMA: "OPTIMUM COLOR MASKING MATRIX DETERMINATION FOR DIGITAL COLOR PLATEMAKING, USING VIRTUAL COLOR SAMPLES" SYSTEMS & COMPUTERS IN JAPAN, vol. 20, no. 7, 1 July 1989, pages 104-112, XP000116733
- PO-CHIEH HUNG: "SMOOTH COLORIMETRIC CALIBRATION TECHNIQUE UTILIZING THE ENTIRE COLOR GAMUT OF CMYK PRINTERS" JOURNAL OF ELECTRONIC IMAGING, vol. 3, no. 4, 1 October 1994, pages 415-424, XP000478118

## Description

The present invention relates to a method and an apparatus for producing a colour conversion table for use in performing colour conversion of data of a coloured picture.

When colour printing is performed using a digital colour printer it is known to perform simulation of typographical printing. That is, with digital colour data of cyan (C), magenta (M), yellow (Y) and black (K) that are generally used in typographical printing, it is possible to estimate the finished print or check the contents of the printing without actually preparing a form of the printing or performing actual printing by a printing machine.

However, ordinarily, a reproduction colour itself is not obtained with mere printing performed by the digital colour printer. This is because the colour of ink used for typographical printing and the colour obtained by colour mixing are generally different from the colour printed by the digital colour printer, with respect to the same colour data. In view of this, if it is desired to obtain a specific reproduction colour when using a digital colour printer, a method involving colour conversion of the input colour data is used so as to obtain the same reproduction colour when typographical printing has been performed based on the colour data used. It is known to perform such colour conversion by referring to a colour conversion table.

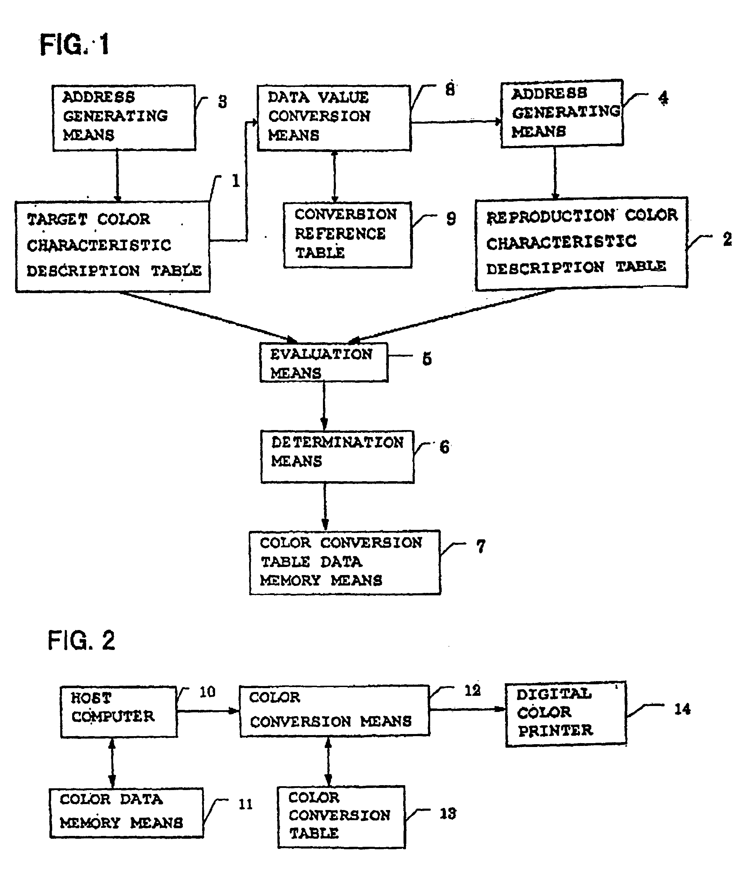

Fig. 2 illustrates the implementation of a method of colour conversion which uses a colour conversion table. Reference 10 denotes a host computer which prepares and edits digital colour data used in the typographical printing. Reference 11 denotes colour data memory means which stores therein the colour data. Reference 12 denotes colour conversion means which converts the colour data that has been input. Reference 13 denotes a colour conversion table used by the colour conversion means. Reference 14 denotes a digital colour printer which performs colour printing using the post-colour-conversion data. The colour data prepared and edited by the host computer 10 or the colour data stored in the colour data memory means 11 is sent to the colour conversion means 12. Usually, colour data is composed of (C), (M), (Y) and (K) components. The colour conversion means 12 converts the (C), (M), (Y) and (K) colour data to (C'), (M'), (Y') and (K') data so that the printed-colour correspondence may hold true when printing in the digital colour printer 14 takes place. In the colour conversion table 13 there are stored predetermined output values with respect to possible input values. That is, the output values have been determined considering the characteristic of the target typographical printing and the characteristic of the digital colour printer used in printing.

In the colour conversion table, although the values with respect to all input values may be prepared previously, it is usual to store a reduced number of values so as to decrease the memory capacity required. Interpolation processing is then conducted when referring to the colour conversion table. Thus, when printing the colour data (C'), (M'), (Y') and (K') with the digital colour printer 14, there are obtained the same colours as those which are obtained when plating or typographical printing has been performed using the initial (C), (M), (Y) and (K) colour data.

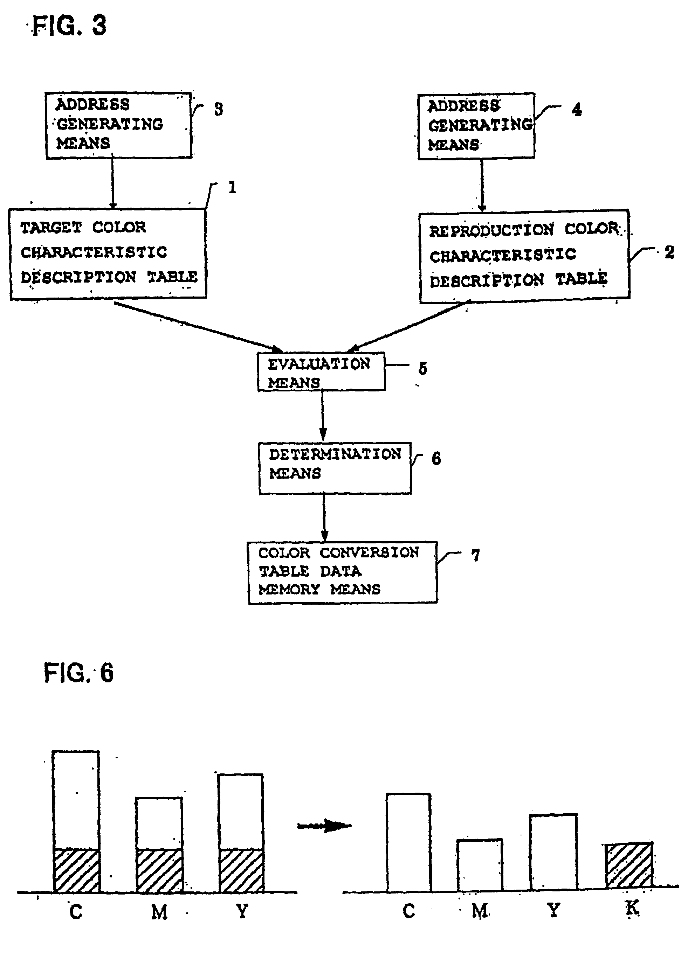

Next, a method of producing the above-described colour conversion table will be explained. Here, an explanation will be given of the case where each of the input and output of the colour conversion is composed of, for example, three components such as (C), (M) and (Y). Fig. 3 is a block diagram illustrating a conventional method of producing the colour conversion table. Reference 1 denotes a target colour characteristic description table which describes the relationship between the input colour data of a target colour output apparatus and the colour value of a colour output therefrom. Reference 2 denotes a reproduction colour characteristic description table which describes the relationship between the input colour data of a reproduction colour output apparatus and the colour value of a colour output therefrom. Here, the target colour output apparatus is an apparatus whose colour is the target with respect to which colour coincidence is to be made. It is for example, a printing machine. Also, the reproduction colour output apparatus is an apparatus wherein actual colour printing is performed and is, for example, a digital colour printer. As the colour value there is used, for example, a CIE 1976 (L*a*b*) which is well known as a uniform colour space. The target colour characteristic description table 1 or reproduction colour characteristic description table 2 can be produced by directly measuring with a colorimeter the colour that is output from the target colour output apparatus or reproduction colour output apparatus. Also, the table 1 or 2 can be produced also by computing the measured colour values with the use of a theoretical formula such as a Neugebauer equation.

Reference 3 denotes an address generating means A for generating an address value with respect to the target colour characteristic description table 1. Reference 4 denotes an address generating means B for generating an address value with respect to the reproduction colour characteristic description table 2. Reference 5 denotes evaluation means for performing an evaluation on the basis of the colour values from the target colour characteristic description table 1 and reproduction colour characteristic description table 2. Reference 6 denotes determination means for performing a determination on the basis of the results of the evaluation means 5. Reference 7 denotes colour conversion table data memory means in which there is stored predetermined computed colour conversion table data.

Through the use of control means not illustrated, the address generating means 3 generates the (C), (M) and (Y) values used as the input values of the colour conversion table while sequentially looping these values. The target colour characteristic description table 1 sends to the evaluation means 5 the colour values corresponding to the (C), (M) and (Y) values generated from the address generating means 3. Also, the control means causes the address generating means 4 to generate all (C), (M) and (Y) combination values corresponding to the input of the reproduction colour characteristic description table 2 with respect to one set of (C), (M) and (Y) values generated from the address generating means 3. The reproduction colour characteristic description table 2 sends to the evaluation means 5 the colour values corresponding to the (C), (M) and (Y) values generated from the address generating means 3. The evaluation means 5 compares the colour values obtained from the target colour characteristic description table 1 and those obtained from the reproduction colour characteristic description table 2. It performs an evaluation based on this comparison. In the evaluation method, there is computed the colour deference ΔE*ab that is obtained by the square root of the sum of the differences between the respective corresponding values of, for example, two sets of (L*, a*, b*). The determination means 6 performs a determination based on the output of the evaluation means 5 and selects one set of colour values of the reproduction colour characteristic description table 2 that are the nearest to the colour values obtained from the target colour characteristic description table 1. In the determination method, there are selected, for example, the colour values which give a minimum colour difference Δ E*ab value determined by the evaluation means 5. Next, the colour data values (C'), (M') and (Y') which give the colour values selected by the determination means are stored in the colour conversion table data memory means 7. That is, the values stored are post-conversion values of the (C), (M) and (Y) values of the colour conversion table obtained from the address generating means 3. The above-described operation is performed while sequentially looping the (C), (M) and (Y) values generated from the address generating means 3. As a result, in the colour conversion table data memory means 7 there is produced the colour conversion table necessary for colour conversion.

Incidentally, although an explanation has been given of the case where the address generating means 4 generates all combination (C), (M) and (Y) values corresponding to the input of the reproduction colour characteristic description table 2 with respect to one set of (C), (M) and (Y) values generated from the address generating means 3; if the same results are obtained, the address generating means 4 is not required at all times to generate all combination (C), (M) and (Y) values.

As explained above, in the case where the input of the reproduction colour characteristic description table 2 is composed of three parameters such as (C), (M) and (Y); since a particular colour is determined by a single combination of (C), (M) and (Y), it is possible to determine optimum values of (C), (M) and (Y) by the determination means.

However, in the case where the input of the reproduction colour characteristic description table 2 has four parameters such as (C), (M), (Y) and (K), the combination of optimum (C), (M), (Y) and (K) values with respect to a particular colour is not singularly determined and many combinations are inconveniently obtained. For this reason, there is the problem that it is impossible to determine a single optimum value from the conventional colour values.

WO 93 20648 discloses a method for producing a colour conversion table where for each (C), (M), (Y) and (K) point of one printer the corresponding optimal (C), (M), (Y) and (K) point of a second printer is determined by comparing colour values.

The present invention has been made with a view to mitigating the above-described problems. The invention is defined by claims 1 and 6.

Embodiments of the present invention will now be described by way of example only and with reference to the accompanying drawings, in which:-
Fig. 1 is a block diagram illustrating a method of producing a colour conversion table according to the present invention,
Fig. 2 illustrates colour conversion performed by referring to a colour conversion table.
Fig. 3 is a block diagram illustrating a conventional method of producing a colour conversion table,
Fig. 4 illustrates an embodiment of data value conversion means according to the present invention,
Fig. 5 illustrates another embodiment of the data value conversion means according to the present invention; and
Fig. 6 is an explanatory view of GCR.

Fig. 1 is a block diagram illustrating a colour conversion table production method according to the present invention. Reference 1 denotes a target colour characteristic description table. Reference 2 denotes a reproduction colour characteristic description table. Reference 3 denotes address generating means A for generating an address value with respect to the target colour characteristic description table 1. Reference 4 denotes address generating means B for generating an address value with respect to the reproduction colour characteristic description table 2. Reference 5 denotes evaluation means. Reference 6 denotes determination means and reference 7 denotes colour conversion table data memory means. The constituent components described thus far are substantially the same as those of Fig. 3.

Reference 8 denotes data value conversion means for converting the values of data (K) or (C), (M), (Y) and (K) of input data to the value of data (K) that corresponds to a reproduction colour output apparatus. Reference 9 denotes a conversion reference table to which reference is made when performing data value conversion by the data value conversion means 8.

In Fig. 1, having regard to the (C), (M), (Y) and (K) values generated from the address generating means 3 according to the control of control means; the target colour characteristic description table 1 sends to the evaluation means 5 colour values corresponding to the (C), (M), (Y) and (K) values. Also, the target colour characteristic description table 1 sends the data values of (K) or (C), (M), (Y) and (K) to the data value conversion means 8. The data value conversion means 8 produces a black data item (K') from the values of the target colour characteristic table according to the (K) or (C), (M), (Y) and (K) values by referring to the conversion reference table 9. The control means causes the address generating means 4 to generate, with respect to one set of (C), (M), (Y) and (K) values generated from the address generating means 3, all combinations of (C), (M) and (Y) values corresponding to the input of the reproduction colour characteristic description table 2.

The reproduction colour characteristic description table 2 sends to the evaluation means 5 the colour values corresponding to the (C), (M) and (Y) values generated from the address generating means 4 and the (K') value converted by the data value conversion means 8. These colour values are compared with each other in the evaluation means 5, whereby comparison and evaluation are made as in the case of Fig. 3. Further, the determination means 6 makes its determination based on the output value of the evaluation means and thereby selects one set of colour values (C'), (M') and (Y') of the reproduction colour characteristic description table 2 as in the case of Fig. 3.

The control means causes the colour conversion table data memory means to store therein the colour data values (C'), (M') and (Y') selected by the determination means and the (K') converted by the data value conversion means 8. They are stored as post-conversion (C), (M), (Y) and (K) values of the colour conversion table obtained from the address generating means 3.

The control means performs the above-described operation while looping sequentially the (C), (M), (Y) and (K) values generated from the address generating means 3. As a result, a colour conversion table is produced in the colour conversion table data memory means.

Next, a method of converting the colour data of (K) in the data value conversion means 8 will be explained. First, the case where the conversion reference table 9 is one-dimensional will be explained.

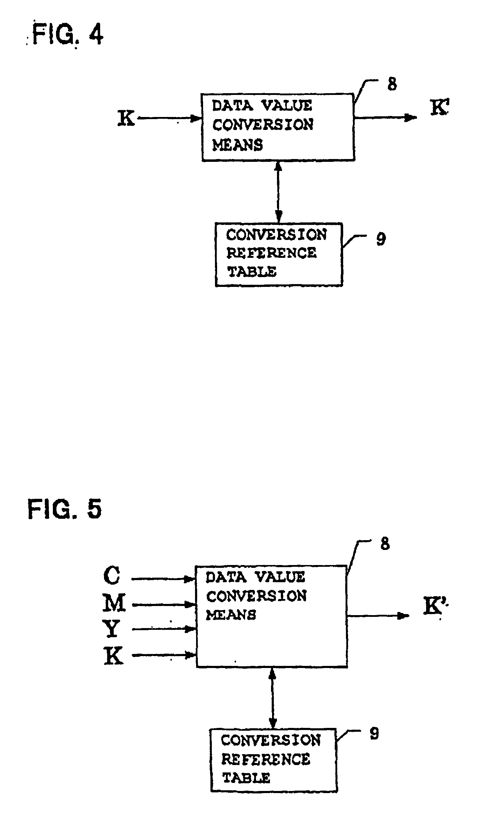

Fig. 4 illustrates an embodiment of the data value conversion means according to the present invention. The value of (K) in the target colour characteristic description table 1 of Fig. 1 is converted in the data value conversion means 8 to (K') by referring to the conversion reference table 9. As a method of producing a one-dimensional conversion reference table 9, for example, the lightness of the colour value of the colour data K of black corresponding to the target colour output apparatus is made to correspond with the lightness of the colour value of the colour data K' of black corresponding to the reproduction colour output apparatus. In this case, first, the gradation pattern of a measurable single colour of black is printed by each of the target colour output apparatus and reproduction colour output apparatus. This gradation pattern has its colours measured to thereby obtain colour values. It is not necessary to print the gradation pattern with regard to all obtainable values of each of the (K) and (K') values. It is sufficient that the gradation be printed and colour measured at suitable intervals and the remaining gradation values can be determined by interpolation. Thereafter, with respect to the respective values of (K) of the target colour output apparatus, determination is made of the correspondence of the values of (K') of the reproduction colour output apparatus enabling the procurement of equal lightnesses. The results are recorded in the conversion reference table 9. In the embodiment of the one-dimensional conversion reference table 9, where the black of the target colour output apparatus and the black of the reproduction colour output apparatus are not completely achromatic colours and there is a difference in hue and chroma between the both blacks; colour reproduction is done with (C'), (M') and (Y') being added to (K'). This results in that even when lightness correspondence holds true with regard to only the (K') value alone, the lightness decreases due to the addition thereto of (C'), (M') and (Y'). This has the result that a change occurs in the direction in which the difference in hue or chroma between the blacks decreases. Therefore, when trying to evaluate and determine at a minimum colour difference, there inconveniently occurs a case where optimum evaluation is done even when lightness correspondence does not sufficiently hold true. Therefore, the conversion reference table 9 of (K) and (K') may be produced with the value of (K') being a value smaller than a normal value, e.g., a value which is 80% thereof in order to leave room for adjustment of the hue, chroma and lightness obtainable with (C), (M) and (Y) components.

Next, a case where the conversion reference table 9 is four-dimensional will be explained.

Fig. 5 illustrates another embodiment of the data value conversion means according to the present invention. The values of (C), (M), (Y) and (K) in the target colour characteristic description table 1 of Fig. 1 are converted in the data value conversion means 8 to (K') by referring to the conversion reference table 9. At this time, the conversion reference table 9 becomes a four-dimensional table because the output value of (K') is determined by the four values (C), (M), (Y) and (K). A method of producing the four-dimensional conversion reference table 9, for example, uses the data value of black that is obtained with the use of a GCR (= Grey Component Replacement, replacement of the grey component) technique in colour separation that is well known in the field of printing. Fig. 6 is an illustration of the GCR. In the GCR, with regard to the (C), (M) and (Y) values, parts of their respective minimum values are replaced by the (K) value and the original (C), (M) and (Y) values are decreased by the values corresponding to the replaced values. On this account, according to the reproduction colour characteristic description table describing colour values with respect to the reproduction colour output apparatus, these values are converted once to (C), (M) and (Y) values and then a (K) component is further produced using the GCR technique. This value of (K) is obtained with respect to each combination of the input values (C), (M), (Y) and (K) of the reproduction colour output apparatus. Therefore, the resulting values can be used as the four-dimensional conversion reference table 9.

It is to be noted that in the method of producing the conversion reference table 9 if the value of (K') is appropriate, it need not be limited to the above-described method. For example, the value of (K') may be aptly determined from empirical knowledge or the like. Also, although the above explanation has been given with the case where (L*, a*, b*) are used as the colour values, other colour values, e.g. (L*, u*, v*), (X, Y, Z) or the like may be used.

As has been described above, according to the present invention, in the case where the reproduction colour output apparatus makes its colour reproduction with the use of four colours, it is possible to produce the colour conversion table easily and highly precisely.

## Claims

1. A colour conversion table production apparatus for producing a colour conversion table (13) for use in converting input data, consisting of respective values for four colours including black, for a target colour output apparatus to data, consisting of respective values of the said colours, for a reproduction colour output apparatus (14), the colour conversion table production apparatus comprising:
a target colour characteristic description table (1) which stores the relationship between input colour data of the target colour output apparatus and the target colour value data of a colour output therefrom, and
a reproduction colour characteristic description table (2) which stores the relationship between input colour data of the reproduction colour output apparatus and the reproduction colour value data of a colour output therefrom, **characterised by** further comprising:
data value conversion means (8) for converting target colour value data to a reproduction data value of black for the reproduction colour output apparatus, and
evaluation means (5) for comparing target colour value data corresponding to one set of input color data items with a plurality of sets of reproduction colour value data corresponding to the set of input colour data items and with the reproduction data value of black from the data value conversion means (8),
whereby the optimum set of reproduction colour value data of the plurality of sets of reproduction colour valve data from the reproduction colour characteristic description table (2) that corresponds to the target colour valve data from the target color characteristic description table (1) is computed from the comparison results of the evaluation means (5) to thereby produce a colour conversion table (13).

2. A colour conversion table production apparatus as claimed in claim 1, **characterised in that** the data value conversion means (8) is for converting black target colour value data corresponding to the input data by referring to a one-dimensional conversion reference table (9).

3. A colour conversion table production apparatus as claimed in claim 2, **characterised in that** the conversion reference table (9) is produced from the colour values of black target colour value data output by the target colour output apparatus and the colour values of black reproduction colour value data output by the reproduction colour output apparatus.

4. A colour conversion table production apparatus as set forth in claim 1, **characterised in that** the data value conversion means (8) is for converting cyan, magenta, yellow and black target colour value data corresponding to the input data to black reproduction colour value data by referring to a four-dimensional conversion reference table (9).

5. A colour conversion table production apparatus as claimed in claim 4, **characterised in that** the conversion reference table (9) is produced from a black data value obtained using a GCR technique in printing from the amount of ink with respect to cyan, magenta, yellow and black reproduction colour value data.

6. A method of producing a colour conversion table (13) for use in converting input data, consisting of respective values for four colours including black, for a target colour output apparatus to data, consisting of respective values of the said colours, for a reproduction colour output apparatus (14), the method comprising:
generating, from a target colour characteristic description table (1) which stores the relationship between input colour data of the target colour output apparatus and the colour value data of a colour output therefrom, target colour value data corresponding to one set of input colour data items,
converting target colour value data to a reproduction data value of black for the reproduction colour output apparatus,
generating, from a reproduction colour characteristic description table (2) which stores the relationship between input colour data of the reproduction colour output apparatus and the colour value data of a colour output therefrom, a plurality of sets of reproduction colour value data that correspond to the set of input colour data items, and
comparing the target colour value data with the plurality of sets of reproduction colour value data and with the reproduction value data of black to determine the optimum set of reproduction colour value data of the plurality of sets of reproduction colour value data from the reproduction colour characteristic description table (2) that corresponds to the target colour value data from the target colour characteristic description table (1), thereby producing a colour conversion table.

7. A colour conversion table production method as claimed in claim 6, **characterised in that** the target colour value data conversion is performed by converting black target colour value data corresponding to the one set of input colour data items by referring to a one-dimensional conversion reference table (9).

8. A colour conversion table production method as claimed in claim 7, **characterised in that** the conversion reference table (9) is produced from the colour values of black target colour value data output by the target colour output apparatus and the colour values of black reproduction colour value data output by the reproduction colour output apparatus.

9. A colour conversion table production method as claimed in claim 6, **characterised by** the use of data value conversion means (8) to convert cyan, magenta, yellow and black target colour value data corresponding to the one set of input colour data items to black reproduction colour value data by referring to a four-dimensional conversion reference table (9).

10. A colour conversion table production method claimed in claim 9, **characterised in that** the conversion reference table (9) is produced from a black data value obtained using a GCR technique in printing from the amount of ink with respect to cyan, magenta, yellow and black reproduction colour value data.

## Patentansprüche

1. Farbumsetzungstabellen-Erzeugungsvorrichtung zum Erzeugen einer Farbumsetzungstabelle (17) für die Verwendung bei der Umsetzung von Eingangsdaten, die jeweilige Werte für vier Farben einschließlich Schwarz umfassen, für eine Ziel-Farbausgabevorrichtung in Daten, die jeweilige Werte der Farben umfassen, für eine Reproduktions-Farbausgabevorrichtung (14), wobei die Farbumsetzungstabellen-Erzeugungsvorrichtung umfaßt:
eine Ziel-Farbeigenschaftsbeschreibungstabelle (1), die die Beziehung zwischen den Eingangs-Farbdaten der Ziel-Farbausgabevorrichtung und den Ziel-Farbwertdaten einer hiervon ausgegebenen Farbe speichert; und
eine Reproduktions-Farbeigenschaftsbeschreibungstabelle (2), die die Beziehung zwischen den Eingangs-Farbdaten der Reproduktions-Farbausgabevorrichtung und den Reproduktions-Farbwertdaten einer hiervon ausgegebenen Farbe speichert; **dadurch gekennzeichnet, daß** sie ferner umfaßt:
Datenwertumsetzungsmittel (8) zum Umsetzen von Ziel-Farbwertdaten in einen Reproduktions-Datenwert von Schwarz für die Reproduktions-Farbausgabevorrichtung, und
Bewertungsmittel (5) zum Vergleichen der Ziel-Farbwertdaten, die einem Satz von Eingangs-Farbdatenelementen entsprechen, mit mehreren Sätzen von Reproduktions-Farbwertdaten, die dem Satz von Eingangs-Farbdatenelementen entsprechen, und mit dem Reproduktions-Datenwert für Schwarz von den Datenwertumsetzungsmitteln (8),
wobei der optimale Satz von Reproduktions-Farbwertdaten der mehreren Sätze von Reproduktions-Farbwertdaten von der Reproduktions-Farbeigenschaftsbeschreibungstabelle (2), die den Ziel-Farbwertdaten von der Ziel-Farbeigenschaftsbeschreibungstabelle (1) entsprechen, aus den Vergleichsergebnissen der Bewertungsmittel (5) berechnet werden, um somit eine Farbumsetzungstabelle (13) zu erzeugen.

2. Farbumsetzungstabellen-Erzeugungsvorrichtung nach Anspruch 1, **dadurch gekennzeichnet, daß** die Datenwertumsetzungsmittel (8) zum Umsetzen von Schwarz-Ziel-Farbwertdaten entsprechend den Eingangsdaten mit Bezug auf eine eindimensionale Umsetzungsreferenztabelle (9) dienen.

3. Farbumsetzungstabellen-Erzeugungsvorrichtung nach Anspruch 2, **dadurch gekennzeichnet, daß** die Umsetzungsreferenztabelle (9) aus den Farbwerten der Schwarz-Ziel-Farbwertdaten, die von der Ziel-Farbausgabevorrichtung ausgegeben werden, und den Farbwerten der Schwarz-Reproduktions-Farbwertdaten, die von der Reproduktions-Farbausgabevorrichtung ausgegeben werden, erzeugt wird.

4. Farbumsetzungstabellen-Erzeugungsvorrichtung nach Anspruch 1, **dadurch gekennzeichnet, daß** die Datenwertumsetzungsmittel (8) zum Umsetzen von Cyan-, Magenta-, Gelb- und Schwarz-Ziel-Farbwertdaten, die den Eingangsdaten entsprechen, in Schwarz-Reproduktions-Farbwertdaten mit Bezug auf eine vierdimensionale Umsetzungsreferenztabelle (9) dienen.

5. Farbumsetzungstabellen-Erzeugungsvorrichtung nach Anspruch 4, **dadurch gekennzeichnet, daß** die Umsetzungsreferenztabelle (9) aus einem Schwarz-Datenwert erzeugt wird, der unter Verwendung einer GCR-Technik beim Drucken aus der Tintenmenge mit Bezug auf Cyan-, Magenta-, Gelbund Schwarz-Reproduktions-Farbwertdaten erhalten wird.

6. Verfahren zur Erzeugung einer Farbumsetzungstabelle (13) für die Verwendung beim Umsetzen von Eingangsdaten, die jeweilige Werte für vier Farben einschließlich Schwarz umfassen, für eine Ziel-Farbausgabevorrichtung in Daten, die jeweilige Werte der Farben umfassen, für eine Reproduktions-Farbausgabevorrichtung (14), wobei das Verfahren umfaßt:
Erzeugen von Ziel-Farbwertdaten, die einem Satz von Eingangs-Farbdatenelementen entsprechen, aus einer Ziel-Farbeigenschaftsbeschreibungstabelle (1), die die Beziehung zwischen den Eingangs-Farbdaten der Ziel-Farbausgabevorrichtung und den Farbwertdaten einer hiervon ausgegebenen Farbe speichert,
Umsetzen von Ziel-Farbwertdaten in einen Reproduktions-Datenwert von Schwarz für die Reproduktions-Farbausgabevorrichtung,
Erzeugen mehrerer Sätze von Reproduktions-Farbwertdaten, die dem Satz von Eingangs-Farbdatenelementen entsprechen, aus einer Reproduktions-Farbeigenschaftsbeschreibungstabelle (2), die die Beziehung zwischen den Eingangs-Farbdaten der Reproduktions-Farbausgabevorrichtung und den Farbwertdaten einer hiervon ausgegebenen Farbe speichert, und
Vergleichen der Ziel-Farbwertdaten mit den mehreren Sätzen von Reproduktions-Farbwertdaten und mit den Reproduktions-Wertdaten von Schwarz, um den optimalen Satz von Reproduktions-Farbwertdaten der mehreren Sätze von Reproduktions-Farbwertdaten aus der Reproduktions-Farbeigenschaftsbeschreibungstabelle (2) zu ermitteln, der den Ziel-Farbwertdaten von der Ziel-Farbeigenschaftsbeschreibungstabelle (1) entspricht, um somit eine Farbumsetzungstabelle zu erzeugen.

7. Farbumsetzungstabellen-Erzeugungsverfahren nach Anspruch 6, **dadurch gekennzeichnet, daß** die Ziel-Farbwertdatenumsetzung durchgeführt wird, indem Schwarz-Ziel-Farbwertdaten, die dem einen Satz von Eingangs-Farbdatenelementen entsprechen, mit Bezug auf eine eindimensionale Umsetzungsreferenztabelle (9) umgesetzt werden.

8. Farbumsetzungstabellen-Erzeugungsverfahren nach Anspruch 7, **dadurch gekennzeichnet, daß** die Umsetzungsreferenztabelle (9) aus den Farbwerten der Schwarz-Ziel-Farbwertdaten, die von der Ziel-Farbausgabevorrichtung ausgegeben werden, und den Farbwerten der Schwarz-Reproduktions-Farbwertdaten, die von der Reproduktions-Farbausgabevorrichtung ausgegeben werden, erzeugt werden.

9. Farbumsetzungstabellen-Erzeugungsverfahren nach Anspruch 6, **gekennzeichnet durch** die Verwendung der Datenwertumsetzungsmittel (8), um Cyan-, Magenta-, Gelb- und Schwarz-Ziel-Farbwertdaten, die dem einen Satz von Eingangs-Farbdatenelementen entsprechen, mit Bezug auf eine vierdimensionale Umsetzungsreferenztabelle (9) in Schwarz-Reproduktions-Farbwertdaten umzusetzen.

10. Farbumsetzungstabellen-Erzeugungsverfahren nach Anspruch 9, **dadurch gekennzeichnet, daß** die Umsetzungsreferenztabelle (9) aus einem Schwarz-Datenwert erzeugt wird, der unter Verwendung einer GCR-Technik beim Drucken aus der Tintenmenge mit Bezug auf Cyan-, Magenta-, Gelbund Schwarz-Reproduktions-Farbwertdaten erhalten wird.

## Revendications

1. Dispositif de production de table de conversion de couleurs pour produire une table de conversion de couleurs (13) devant être utilisée pour convertir des données d'entrée, constituées des valeurs respectives de quatre couleurs, y compris le noir, d'un dispositif de sortie en couleurs cibles en données constituées des valeurs respectives desdites couleurs, d'un dispositif de sortie en couleurs de reproduction (14), le dispositif de production de table de conversion de couleurs comprenant :
une table de description de caractéristique de couleurs cibles (1) qui met en mémoire la relation entre les données chromatiques d'entrée du dispositif de sortie en couleurs cibles et les données de valeur chromatique d'une sortie couleur provenant de celui-ci, et
une table de description de caractéristique de couleurs de reproduction (2) qui met en mémoire la relation entre les données chromatiques d'entrée du dispositif de sortie en couleurs de reproduction et les données de valeur chromatique de reproduction d'une sortie couleur provenant de celui-ci, **caractérisé en ce qu'**il comprend en outre :
un moyen de conversion de valeur de donnée (8) pour convertir les données de valeur chromatique cible en une valeur de donnée de reproduction de noir pour le dispositif de sortie en couleurs de reproduction, et
un moyen d'évaluation (5) pour comparer les données de valeur chromatique cible correspondant à un ensemble d'éléments de données chromatiques d'entrée à une pluralité d'ensembles de données de valeur chromatique de reproduction correspondant à l'ensemble d'éléments de données chromatiques d'entrée et à la valeur de donnée de reproduction de noir provenant du moyen de conversion de valeur de donnée (8),
ce par quoi l'ensemble optimal des données de valeur chromatique de reproduction de la pluralité d'ensembles de données de valeur chromatique de reproduction provenant de la table de description de caractéristique de couleurs de reproduction (2) qui correspond aux données de valeur chromatique cible provenant de la table de description de caractéristique de couleurs cibles (1) est calculé à partir des résultats de comparaison du moyen d'évaluation (5) pour produire ainsi une table de conversion de couleurs (13).

2. Dispositif de production de table de conversion de couleurs selon la revendication 1, **caractérisé en ce que** le moyen de conversion de valeur de donnée (8) est destiné à convertir des données de valeur chromatique cible noires correspondant aux données d'entrée en se référant à une table de référence de conversion unidimensionnelle (9).

3. Dispositif de production de table de conversion de couleurs selon la revendication 2, **caractérisé en ce que** la table de référence de conversion (9) est produite à partir des valeurs chromatiques des données de valeur chromatique cible noires délivrées en sortie par le dispositif de sortie en couleurs cibles et des valeurs chromatiques des données de valeur chromatique de reproduction noires délivrées en sortie par le dispositif de sortie en couleurs de reproduction.

4. Dispositif de production de table de conversion de couleurs selon la revendication 1, **caractérisé en ce que** le moyen de conversion de valeur de donnée (8) est destiné à convertir des données de valeur chromatique cible cyan, magenta, jaune et noire correspondant aux données d'entrée en données de valeur chromatique de reproduction noires en se référant à une table de référence de conversion quadri-dimensionnelle (9).

5. Dispositif de production de table de conversion de couleurs selon la revendication 4, **caractérisé en ce que** la table de référence de conversion (9) est produite à partir d'une valeur de donnée noire obtenue au moyen d'une technique GCR (remplacement de la composante de gris) lors d'une impression à partir de la quantité d'encre par rapport aux données de valeur chromatique de reproduction cyan, magenta, jaune et noire.

6. Procédé de production d'une table de conversion de couleurs (13) devant être utilisée pour convertir des données d'entrée, constituées des valeurs respectives de quatre couleurs, y compris le noir, d'un dispositif de sortie en couleurs cibles en données constituées des valeurs respectives desdites couleurs, d'un dispositif de sortie en couleurs de reproduction (14), le procédé comprenant les étapes consistant à :
générer, à partir d'une table de description de caractéristique de couleurs cibles (1) qui met en mémoire la relation entre les données chromatiques d'entrée du dispositif de sortie en couleurs cibles et les données de valeur chromatique d'une sortie couleur provenant de celui-ci, les données de valeur chromatique cible correspondant à un ensemble d'éléments de données chromatiques d'entrée,
convertir les données de valeur chromatique cible en une valeur de donnée de reproduction de noir pour le dispositif de sortie en couleurs de reproduction,
générer, à partir d'une table de description de caractéristique de couleurs de reproduction (2) qui met en mémoire la relation entre les données chromatiques d'entrée du dispositif de sortie en couleurs de reproduction et les données de valeur chromatique d'une sortie couleur provenant de celui-ci, une pluralité d'ensembles de données de valeur chromatique de reproduction qui correspondent à l'ensemble d'éléments de données chromatiques d'entrée, et
comparer les données de valeur chromatique cible à la pluralité d'ensembles de données de valeur chromatique de reproduction et aux données de valeur de reproduction de noir pour déterminer l'ensemble optimal de données de valeur chromatique de reproduction de la pluralité d'ensembles de données de valeur chromatique de reproduction provenant de la table de description de caractéristique de couleurs de reproduction (2) qui correspond aux données de valeur chromatique cible provenant de la table de description de caractéristique de couleurs cibles (1), produisant ainsi une table de conversion de couleurs.

7. Procédé de production de table de conversion de couleurs selon la revendication 6, **caractérisé en ce que** l'étape de conversion de données de valeur chromatique cible est exécutée en convertissant les données de valeur chromatique cible noires correspondant à l'ensemble d'éléments de données chromatiques d'entrée en se référant à une table de référence de conversion unidimensionnelle (9).

8. Procédé de production de table de conversion de couleurs selon la revendication 7, **caractérisé en ce que** la table de référence de conversion (9) est produite à partir des valeurs chromatiques des données de valeur chromatique cible noires délivrées en sortie par le dispositif de sortie en couleurs cibles et des valeurs chromatiques des données de valeur chromatique de reproduction noires délivrées en sortie par le dispositif de sortie en couleurs de reproduction.

9. Procédé de production de table de conversion de couleurs selon la revendication 6, **caractérisé par** l'utilisation d'un moyen de conversion de valeur de donnée (8) pour convertir des données de valeur chromatique cible cyan, magenta, jaune et noire correspondant à l'ensemble d'éléments de données chromatiques d'entrée en données de valeur chromatique de reproduction noires en se référant à une table de référence de conversion quadri-dimensionnelle (9).

10. Procédé de production de table de conversion de couleurs selon la revendication 9, **caractérisé en ce que** la table de référence de conversion (9) est produite à partir d'une valeur de donnée noire obtenue au moyen d'une technique GCR (remplacement de la composante de gris) lors d'une impression à partir de la quantité d'encre par rapport aux données de valeur chromatique de reproduction cyan, magenta, jaune et noire.
